Europäisches Patentamt

European Patent Office

Office européen des brevets

(19)

(11) Veröffentlichungsnummer: **0 151 497 B1**

(12) **EUROPÄISCHE PATENTSCHRIFT**

(45) Veröffentlichungstag der Patentschrift: **02.05.90**

(21) Anmeldenummer: **85200056.1**

(22) Anmeldetag: **21.01.85**

(51) Int. Cl.⁵: **H 02 K 21/16, H 02 K 1/27**

(54) **Einphasensynchronmotor mit einem zweipoligen dauermagnetischen Rotor.**

(30) Priorität: **30.01.84 DE 3403041**

(43) Veröffentlichungstag der Anmeldung:
**14.08.85 Patentblatt 85/33**

(45) Bekanntmachung des Hinweises auf die
Patenterteilung:
**02.05.90 Patentblatt 90/18**

(84) Benannte Vertragsstaaten:
**AT DE FR GB**

(56) Entgegenhaltungen:
**DE-A-1 488 267**
**DE-C-1 488 270**
**US-A-3 432 735**
**US-A-4 214 181**

**ELEKTROTECHNIK UND MASCHINENBAU, Nr.
2, 1973, Seiten 42-47, Wien, AT ;
Dauermagneterregte Synchronmotoren"**

(73) Patentinhaber: **Philips Patentverwaltung GmbH
Wendenstrasse 35 Postfach 10 51 49
D-2000 Hamburg 1 (DE)**
(84) **DE**

(73) Patentinhaber: **N.V. Philips'
Gloeilampenfabrieken
Groenewoudseweg 1
NL-5621 BA Eindhoven (NL)**
(84) **FR GB AT**

(72) Erfinder: **Bertram, Leo
Am Sender 10
D-5190 Stolberg (DE)**
Erfinder: **Diefenbach, Gerhard
Schulstrasse 19
D-5100 Aachen (DE)**
Erfinder: **Schemmann, Hugo, Dr.
Zwartebergweg 6
NL-6371 XD Schaesberg (NL)**

(74) Vertreter: **Kupfermann, Fritz-Joachim, Dipl.-Ing.
et al
Philips Patentverwaltung GmbH Wendenstrasse
35 Postfach 10 51 49
D-2000 Hamburg 1 (DE)**

EP 0 151 497 B1

**Beschreibung**

Die Erfindung bezieht sich auf einen Einphasensynchronmotor mit einem zweipoligen dauermagnetischen Rotor mit einem Magnetmaterial mit einer Remanenzinduktion $B_r$, mit einer spezifischen Dichte δ, einem Rotordurchmeser d, einer Amplitude des resultierenden Klebemomentes $\hat{M}_{k1}$ und einem Massenträgheitsmoment J.

Ein Einphasensynchronmotor mit einem derartigen mechanischen Aufbau ist aus der Zeitschrift "Feinwerktechnik und Meßtechnik" 87 (1979/4, S. 163 bis 169) bekannt. Derartige Motoren werden zum Antrieb von kleinen Haushaltgeräten, wie Zitruspressen, Dosenöffnern usw. eingesetzt.

Der selbständige Anlauf dieser Motoren stellt ein Problem dar, das unterschiedliche Aspekte aufweist. Im folgenden wird unter dem Anlauf der Übergangsvorgang verstanden, der mit dem Stillstand des Motors beginnt und mit einem durch eine konstante mittlere Winkelgeschwindigkeit gekennzeichneten Zustand endet. Dabei kann dieser Endzustand stationär sein mit periodischen Schwankungen der momentanen Winkelgeschwindigkeit oder aber auch noch zusätzliche niederfrequente Schwankungen aufweisen, die sich diesen überlagern. Ein Motor läuft nicht an, wenn nach dem Einschalten der Spannung keiner dieser Zustände erreicht wird, sei es, daß er überhaupt nicht in Bewegung kommt, sei es, daß er unregelmäßig seine Drehrichtung ändert.

Die Anlaufspannung ist definiert als die niedrigste Spannung eines Spannungsbereiches, oberhalb der der Motor bie allen Einschaltaugenblicken der Netzspannung immer anläuft. Hierbei muß die Breite des Spannungsbereiches mindestens gleich der Breite des geforderten Betriebsspannungsbereiches sein. Die Belastung des Motors hat auf das Anlaufen, die Anlaufspannung und die Bereichsbreite einen starken Einfluß.

Der Anlauf hat des weiteren eine statische und eine dynamische Seite. Unter statischen Gesichtspunkten muß dafür gesorgt werden, unter Umständen auch durch zasätzliche mechanische oder andere Hilfsmomente, daß der Rotor unter dem Einfluß von Reibungsmomenten oder anderen Lastmomenten nicht in einer Position zum Stillstand kommen kann, in der das sinusförmig von der Rotorposition abhängige Strommoment gleich Null ist. In der Praxis wird dies bei den bekannten Motoren im allgemeinen durch eine unsymmetrische Formgebung der Stratorpolbögen erreicht. Aufgrund dieser Unsymmetrie ist das magnetische Reluktanzmoment des Rotors, auch Klebemoment genannt, nicht gleich Null in der Stellung, in welcher das Strommoment gleich Null ist. Es kann bei nicht zu großen Reibungswerten den Rotor aus dieser Stellung verdrehen, so daß das Strommoment zur Beschleunigung wirksam werden kann. Der Unsymmetriewinkel beträgt bei bekannten Modellen etwa 15°, kann auch ca. 30° erreichen.

Hinsichtlich der Dynamik des Anlaufvorganges ging man zunächst davon aus (ETZ A 87, März 1966, S. 171-175), daß dieser in Form einer Drehschwingung mit answachsender Amplitude erfolgt. Dabei sollte der Anlauf erfolgen, wenn die Amplitude einen Wert von 180° überschreitet.

Zunächst war man der Meinung, daß das Klebemoment den Anlauf behindert, und es günstig sei, dieses evtl. durch Aufteilen des Rotors in zwei oder mehr Teile zu verkleinern oder sogar gänzlich zu beseitigen (DE—PS 14 88 267, "Der Elektromeister", Heft 1, 1965). Andererseits zeigte sich später, daß "ein bestimmtes, nicht zu kleines Klebemoment vorhanden sein muß, da sonst das magnetische Spulenfeld für die weiteren Andorderungen zu groß gemacht werden muß" (ETZ A 87, März 1966).

Untersuchungen an den Synchronmotoren, die inzwischen in großen Serien zum Antrieb von kleinen Haushaltgeräten hergestellt werden, haben gezeigt, daß hier der eigentliche Anlauf in Form einer Sprungbewegung aus dem Stillstand in dei synchrone Geschwindigkeit erfolgt. Dieser Sprung erfolgt im allgemeinen in einer Zeit von etwa 6 msec. Hierdurch werden Bedingungen an die Motordimensionierung gestellt, die in dem Begriff der Anlaufzeitkonstanten ihren Ausdruck finden. Diese Anlaufzeitkonstante muß güstigerweise im Bereich zwischen etwa 2—6 msec liegen. Es gilt die folgende Bedingung:

$$\tau = \frac{\frac{1}{2}\omega_e^2 \cdot J}{\frac{U}{Z} \cdot E} \approx 2 - 6 \text{ msec .}$$

Hierbei ist:
$\omega_e$     Kreisfrequenz des Netzes
J     Massenträgheitsmoment von Motor und Last
U     Netzspannung
E     Induzierte Spannung
Z     Spulenimpedanz

Das Klebemoment kommt bei dem Begriff der Anlaufzeitkonstanten nicht vor. Bei der Albeitung dieser Anlaufbedingung wurde vorausgesetzt, daß der Rotor in einer mehr oder weniger irregulären Bewegung nach dem Einschalten der Spannung schließlich in eine Stellung kommen kann, in der die Rotormagnetisierung in etwa senkrecht zum Spulenfeld steht und aus dieser Stellung heraus der besagte Sprung gemacht werden kann.

Dies ist bei den bekannten Motoren immer der Fall gewesen. Wird die Anlaufzeitkonstante unterschritten, z. B. bei zu hoher Spannung, so führt der Rotor stark unregelmäßige Bewegungen mit Richtungsumkehr aus. Wird die Anlaufzeitkonstante zu groß, z. B. durch ein zu großes Trägheitsmoment, so kommt er nicht in Gang, bei sehr großen Trägheitsmomenten vibriert der Rotor schließlich nur noch.

Vergrößert man bei den bekannten Motoren, bei Null beginnend, die Spannung, so führt der Motor zunächst Schwingungen kleiner Amplitude aus, die zwar anwachsen, aber einen Auslenkwert von etwa 20° bis 30° im allgemeinen nicht überschreiten.

Aus diesem Schwingungsrhythmus fallen die bekannten Motoren bei weiterer Vergrößerung der Spannung heraus und gehen in einen mehr oder weniger regelmäßigen Rundlauf, evtl. mit Drehrichtungsumkehr, über. Die Spannung, bei der dies geschieht, läßt sich in guter Näherung mit Hilfe der Anlaufzeitkonstanten berechnen. Sie wird im folgenden als Losbrechspannung bezeichnet. Bei Vorgrößerung der trägen Masse evtl. durch eine Belastung, steigt die Losbrechspannung im allgemeinen an.

Die Anlaufspannung im oben definierten Sinn kann je nach den Stabilitätsbedingungen für die Rotorbewegung höher liegen als die Losbrechspannung. Obwohl momentan die synchrone Winkelgeschwindigkeit überschritten wird, kann der Motor keine Drehbewegung mit einer eindeutigen Drehrichtung und konstanter mittlerer Winkelgeschwindigkeit aufrecht erhalten. Alle bisher bekannten Einphasensynchronmotoren verhalten sich nach diesem Muster.

Im Zuge der Miniaturisierung dieser Motoren und Geräte ist es naheliegend, höherwertige Magnetmaterialien zu verwenden. Bei Verwendung von RES-Magneten (Rare Earth Sintered) anstelle von Barium- oder Strontiumferrit-Magneten läßt sich z. B. die Remanenzinduktion von etwa 350 mT (3500 G) auf mehr als 750 mT vergrößern. Die spezifische Dichte steigt dabei von etwa 4.8 auf 8.2 gr/cm³. Der Einfluß dieser Maßnahme auf die Anlaufzeitkonstante ist günstig, sie wird bei gleichbleibenden Rotorabmessungen kleiner. Ähnlich wirkt eine Reduzierung des Rotordurchmessers. Auch dies verringert die Anlaufzeitkonstante.

Dennoch beobachtet man bei Motoren mit höherwertigem Magnetmaterial, daß dei Losbrechspannung bei bestimmten Anfangswerten der angelegten Netzspannung, d. h. also bei bestimmten Einschaltaugenblicken, wesentlich, höher liegt, als aufgrund der obigen Überlegungen unter Berücksichtigung der Anlaufzeitkonstanten zu erwarten wäre.

Es gibt eine Reihe von Momentanwerten der Spannung im Einschaltaugenblick, die zu einem normalen Anlauf in der oben geschilderten Form führen. Bie anderen Einschaltaugenblickswerten wird der Rotor jedoch in einem Schwingzustand gefangen, wobei der Rotor um die Stillstandslage herum Schwingungen ausführt, die im folgenden als Grenzschwingungen bezeichnet werden. Erst bei wesentlich höherer Spannung, als aufgrund der Anlaufzeitkonstanten zu erwarten wäre, kann der Rotor aus diesem Schwingungszustand ausbrechen.

Das Auftreten dieser Grenzschwingungen weit oberhalb der durch die Anlaufzeitkonstante gegebenen Spannung ist bei den hier behandelten Einphasensynchronmotoren neu.

Aufgabe der Erfindung ist es, diese Grenzschwingung bie neu zu dimensionierenden Motoren mit höherwertigen Magnetmaterialien zu vermeiden, um so die Anlaufspannung auf den niedrigsten Wert zu bringen bzw. den für die gestellte Antriebsaufgabe kleinsten Motor zu dimensionieren.

Die gestellte Aufgabe ist erfindungsgemäß dadurch gelöst, daß der Rotor aus höherwertigem Magnetmaterial besteht, wobei mit einer das Rotormaterial kennzeichnenden Konstanten.

$$ C = \frac{B_r}{\sqrt{\varrho}} \qquad \text{größer als } 6,0 \quad \frac{mT}{\sqrt{kg/m^3}} $$

das Trägheitsmoment J und/oder das Klebemoment $\hat{M}_{kl}$ derartig beeinflußt sind, daß eine Eigenfrequenz $\omega_0$ des mit kleiner Amplitude frei schwingenden Systems aus Rotor und Last

$$ \omega_0 = \sqrt{\frac{2\,\hat{M}_{kl}}{J}} $$

ungleich der Netzkreisfrequenz $\omega_e$ ist.

Auf diese Weise werden Grenzschwingungen vermieden und die Anlaufspannung auf den niedrigsten Wert gesenkt. Es zeigt sich nämlich, daß die nachteiligen Wirkungen der Grenzschwingungen auf den Motoranlauf nicht mehr auftreten, wenn die Eigenfrequenz $\omega_0$ des Systems weit genug weg von der Netzkreisfrequenz $\omega_e$ liegt.

Ein aus "Feinwerktechnik" 4/79 (Seiten 163 bis 169) bekannter Motor für eine Netzfrequenz von 50 Hz hat z. B. ein Massenträgheitsmoment von $5.36 \cdot 10^{-7}$ Nmsec² und eine Klebemomentamplitude von $145 \cdot 10^{-4}$ Nm. Es errechnet sich daraus eine Eigenfrequenz $\omega_0$ von $2\pi \cdot 37$/sec. Beim Aufbringen weiterer Trägheitsmomente sinkt der Wert noch weiter.

Anders ist es bei Verwendung höherwertiger Magnetmaterialien. In diesem Fall steigt nicht nur der

3

Fluß, sondern stärker noch die Klebekraft. Diese ist bei sonst gleicher Konfiguration in erster Näherung quadratisch abhängig von der Feldstärke. Sie nimmt also stark zu. Da die spezifische Dichte nicht in gleichem Maße großer wird, führt die Verwendung besserer Magnetmaterialien im allgemeinen zu einer Erhöhung der Rotoreigenfrequenz.

Bei Verwendung von RES 160-Magnetmaterial mit einem $B_r$ von 790 mT und einer Dichte von 8.2 gr/cm$^3$ ergibt sich z. B. eine Eigenfrequenz $\omega_o$ von 2 $\pi$ . 64/sec. Bei Belastung des Motors mit, einem zusätzlichen Trägheitsmoment gerät man schnell in die Nähe der Netzfrequenz.

Eine Möglichkeit zur Beeinflussung der Eigenfrequenzen ist die Verwendung von zusätzlichen Trägheitsmomenten. Dies kann vor allem bei der Miniaturisierung aus geometrischen Gesichtspunkten auf Schwierigkeiten stoßen. Zudem wird dadurch die Anlaufzeitkonstante größer, und die Anlaufspannung steigt entsprechend. Im Einzelfall kann diese Methode jedoch Erfolg haben. Voraussetzung für die Anwendung der unterschiedlichen Verfahrensweisen ist jedoch, daß man den Einfluß von Eigenfrequenz, Trägheitsmoment und Klebemoment kennt und den Resonanzfall bei der Dimensionierung bewußt vermeidet.

Geht man, ausgehend von den bekannten Motoren und von dem bekannten Kenntnisstand, bei der Dimensionierung von neuen Motoren mit größeren Remanenzwerten in der bekannten Weise vor und achtet vot allem auf die Anlaufzeitkonstante, bemißt den Luftspalt im übrigen in erster Linie nach fertigungstechnischen Gesichtspunkten, so kommt man mit Sicherheit in ein Gebiet der Rotoreigenfrequenz, welches zu Grenzschwingungen und damit zu einer Erhöhung der Anlaufspannung führt.

Bei der Dimensionierung ist aber auch darauf zu achten, daß nicht die Eigenfrequenz des Motors allein, sondern die des Gezamtsystems von Bedeutung ist. Die erforderliche Verstimmung gegenüber der Netzfrequenz kann somit auch durch zusätzliche träge Massen in der Belastung erfolgen. Diese Dimensionierungsregel in ihrer Gesamtheit ist vorteilhaft bei allen Einphasensynchronmotoren mit dauermagnetischem Läufer. Die Berücksichtigung der Dimensionierungsregel aber ist besonders wichtig bei Rotoren mit höherwertigem Magnetmaterial.

Nach einer weiteren Ausgestaltung der Erfindung ist vorgesehen, daß die Eigenfrequenz $\omega_o$ großer als 1,1—1,2 $\omega_e$ oder kleiner als 0,9—0,8 $\omega_e$ ist. Damit liegt man so weit von der Resonanzfrequenz ab, daß sich die Grenzschwingungen kaum noch störend bemerkbar machen.

Die Anlaufspannung wird dadurch so weit gesenkt, wie es aufgrund der Anlaufzeitkonstanten und der Stabilität der Bewegung möglich ist. Auf der anderer Seite kann ein Motor auf diese Weise für eine bestimmte Anwendung so minimiert werden, daß er unter Berücksichtigung der obigen Randbedingungen die geforderte Anlaufspannung einhält. Eine einfache Möglichkeit der Beeinflussung besteht in einer Verkleinerung oder Vergrößerung des Luftspaltes.

Auf diese Weise ist es möglich, die Abmessungen des Gerätes und den Materialaufwand so klein wie möglich zu halten und somit auch den wirtschaftlichsten Motor zu realisieren.

Ist das minimale Klebemoment aus Gründen der statischen Aulaufbedingungen vorgeschrieben, so läßt sich durch Manipulation des Trägheitsmomentes in gewissen Grenzen eine Verbesserung der Anlaufspannung erreichen. Ist eine Verkleinerung des Trägheitsmomentes möglich, so kann man den überresonanten Bereich anstreben durch eine Reduzierung des Rotordurchmessers, begleitet von einer Verkleinerung des Luftspaltes.

Kann das Trägheitsmoment nicht verkleinert werden, so muß durch zusätzliche Trägheitsmomente der unterresonante Bereich angestrebt werden. Hiermit ist aber grundsätzlich eine Erhöhung der Anlaufzeitkonstanten und damit eine Erhöhung der Anlaufspannung gegenüber dem Wert bei kleinen Trägheitsmomenten im nicht-resonanten Fall (also bei kleinen Klebemomenten) verbunden.

Eine einfache Methode zur Herabsetzung der Eigenfrequenz ohne große weiters Beeinflussung des Motors besteht nach einer weiteren Ausgestaltung der Erfindung in einer Vergroßerung des Luftspaltes und einer damit verbundenen Verkleinerung des Klebemomentes in der Art, daß die Eigenfrequenz $\omega_o$ kleiner 0,9—0,8 $\omega_e$ wird. Dies hat über den quadratischen Zusammenhang mit dem Rotorfluß einen weiteren starken Effekt, weil auch die das Klebemoment mitbestimmenden Streuflüsse beeinflußt werden. Bei bekannten Motoren liegt der Luftsplat zwischen Werten von 0,3—0,65 mm an der engsten Stelle und 0,95—1,5 mm an der breitesten Stelle. Nach der Erfindung ist der Luftspalt an der engsten Stelle großer als 0,65 mm.

Verwendet man bei einer Neukonstruktion mit RES-Rotor den gleichen Rotordurchmesser und ähnliche Luftspaltgeometrien, z. B. 0,3 mm an der engsten und 1,5 mm an der breitesten Stelle des Luftspaltes, so erhält man bei einer bestimmten Rotorlänge eine Klebemomentamplitude von z.B. 145 cmp (14,2 . 10$^{-3}$Nm). Durch eine Vergrößerung des Luftspaltes an der engsten Stelle um 0,6 mm sinkt das Klebemoment bei einem Luftspalt an der breiten Stelle von 1,5 mm auf 85 cmp (8,3 . 10$^{-3}$Nm) ab. Dieser große Luftspalt überschreitet gebräuchlichen Werte beträchtlich. Unter Berücksichtigung eines zusätzlichen Getriebes mit einem Massenträgheitsmoment von 10$^{-7}$ Nms$^2$ ergibt sich bei einem Rotorträgheitsmoment von ca. 2 . 10$^{-7}$ Nmsec$^2$ durch diese Manipulation eine Absenkung der Eigenfrequenz $\omega_o$ von ca. 49 . 2$\pi$/sec auf 37,5 . 2$\pi$/sec. Es ergibt dies einen Gewinn an Anlaufspannung von rund 100 V. Durch die geschilderte Maßnahme wird aus einem unbrauchbaren Antrieb eine einsetzbare Konstruktion.

Nach einer weiteren Ausgestaltung der Erfindung ist vorgesehen, daß das Magnetmaterial derart aufmagnetisiert ist, daß die Eigenfrequenz $\omega_o$ kleiner 0,9—0,8 $\omega_e$ ist. Dies ist nach einer weiteren Ausgestaltung der Erfindung auch möglich durch eine geeignete Magnetisierungsverteilung. Dies kann dadurch erfolgen, daß der Rotor nicht voll aufmagnetisiert wird oder daß innerhalb der Magnetisierungsverteilung eine größere Radialkomponente auftritt.

Nach einer weiteren Ausgestaltung der Erfindung ist vorgesehen, daß der Luftspalt derart verkleinert ist, daß die Eigenfrequenz $\omega_o$ großer als 1,1—1,2 $\omega_e$ ist. Wegen der damit verbundenen größeren Klebekraft kann der Motor auch bei größeren Reibungsmomenten noch anlaufen.

Nach einer weiteren Ausgestaltung der Erfindung ist vorgesehen, daß die Eigenfrequenz durch zusätzliche magnetische oder mechanische Momente vergrößert oder verkleinert wird. Solche Momente können durch zusätzliche Elemente, wie Federn oder Hilfsmagnete, erzeugt werden, die das Klebemoment unterstützen oder schwächen derart, daß die Eigenfrequenz $\omega_o$ nicht mit der Netzkreisfrequenz zusammenfällt.

Nach einer weiteren Ausgestaltung der Erfindung ist vorgesehen, daß die Bohrung innerhalb des Rotorzylinders vergrößert wird. Hierdurch wird die Klebekraft verkleinert und die Eigenfrequenz in einen Bereich unterhalb von 0,9—0,8 $\omega_e$ verlagert.

Nach einer weiteren Ausgestaltung der Erfindung wird der Sättigungsgrad des Statoreisens verändert. Hiermit ist es möglich, das Klebemoment derart zu beeinflussen, daß die Eigenfrequenz $\omega_o$ größer 1,1—1,2 $\omega_e$ oder kleiner 0,9—0,8 $\omega_e$ wird.

Die Erfindung wird anhand von Diagrammen und Polschuhdarstellungen eines Einphasensynchronmotors näher erläutert. Es zeigen:

Fig. 1 ein Diagramm, in welchem der Einfluß der Klebemomente auf den Anlauf des Motors dargestellt ist,

Fig. 2 den Einfluß von zusätzlichen Massenträgheitsmomenten bei gleichzeitiger Variation des Klebemomentes auf den Anlauf des Motors,

Fig. 3 die Abhangigkeit der Anlaufspannung von der Eigenfrequenz des Motorlastsystems bzw. von dem Frequenzverhältnis von Eigenfrequenz und Netzfrequenz,

Fig. 4a und 4b einen Ausschnitt aus dem Polbereich eines Einphasensynchronmotors, aus dem die Polschuhform und die Luftspaltverhältnisse erkennbar sind.

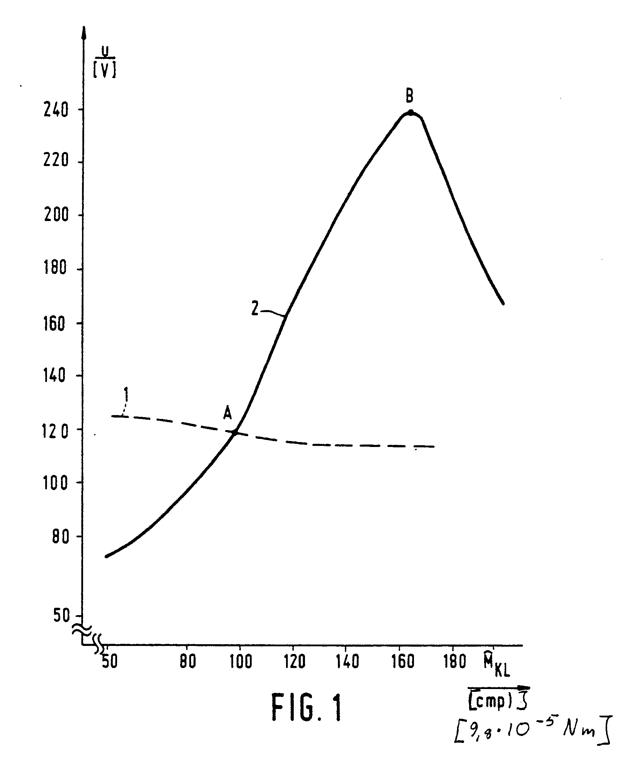

In dem Diagramm nach Fig. 1 sind die Anlaufverhältnisse dargestellt, und zwar in Abhängigkeit von der Klebemomentamplitude bei einem Einphasensynchronmotor mit RES-Dauermagnetrotor, wobei das Magnetmaterial eine Remanenzinduktion von etwa 800 mT hat. Linie 1 zeigt dabei die relativ niedrige Spannung, bei der der Motor in den meisten Fällen anläuft und welche nur wenig vom Klebemoment abhängig ist. Die Linie 1 entspricht den normalen Vorstellungen über den Anlauf des Motors. Die Linie 2 zeigt die Spannung, bis zu welcher Schwingungen auftreten, die den Motor am Anlaufen hindern. Bis zu Punkt A liegen die Spannungen entsprechend Linie 2, bei denen noch Schwingungen auftreten können, unterhalb der durch Linie 1 angegebenen Spannungen. Linie 1 gibt in diesem Bereich dei tatsächliche Anlaufspannung an. Bei größeren, als dem Punkt A entsprechenden Klebemomentwerten können sich bei bestimmten Einschaltaugenblicken der Spannung die Schwingungen aber noch bei zum Teil wesentlich höherer Spannung ausbilden. Die Effektive Anlaufspannung ist wesentlich größer als die durch Linie 1 angegebene Spannung.

Mit zunehmender Klebemomentamplitude steigt oberhalb von Punkt A die Anlaufspannung zunächst stark an. Nach dem Überschreiten einer Maximalspannung bei Punkt B wird sie bie weiter steigender Klebemomentamplitude wieder deutlich kleiner.

Durch das Auftreten dieser Schwingungen ergibt sich der schwerweigende Nachteil, daß der Motor erst bei wesentlich höheren Spannungen sicher anläuft als es an sich möglich wäre.

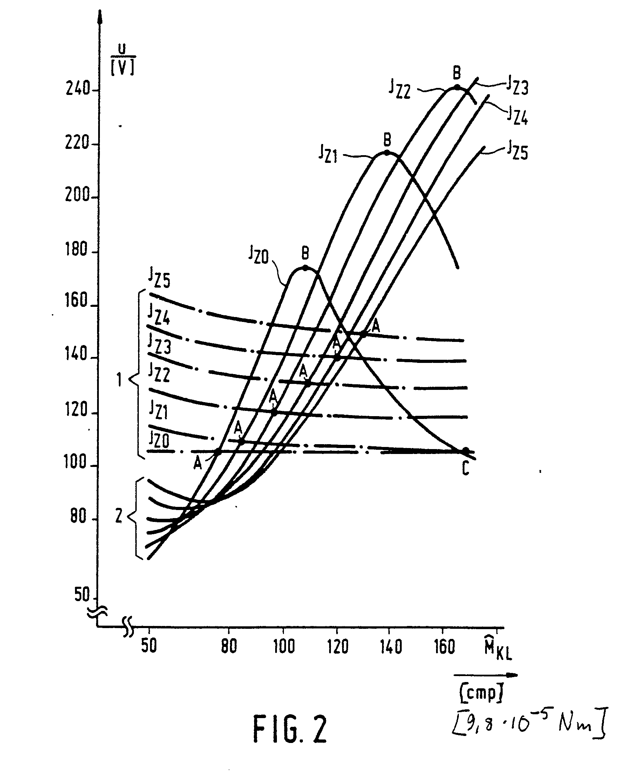

In dem Diagramm nach Fig. 2 sind die Verhältnisse ähnlich wie in Fig. 1 dargestellt, wenn das Gesamtmassenträgheitsmoment verändert wird. Die Linien 2 zeigen die Verhältnisse bei verschiedenen Trägheitsmomenten $J_{z0}$ — $J_{z5}$ und geben dabei, wie in Fig. 1 beschrieben, die Spannungen an, bis zu denen noch Schwingungen auftreten können.

Die Linien 1 bezeichnen die Spannungen, bei denen in Abhängigkeit vom Massenträgheitsmoment $J_{z0}$ — $J_{z5}$ der Motor bie bestimmten Einschaltaugenblicken der Spannung anlaufen kann. Die Linien 1 und 2 schneiden sich dabei wieder in den Punkten A. Bei kleinen Massenträgheitsmomenten biegen die Linien 2 in den Punkten B um. Das bedeutet, daß bie wachsendem Klebemoment die Grenzspannungen, bei denen noch Schwingungen auftreten können, zunächst ebenfalls anwachsen. Nach dem Durchlaufen des zu Punkt B gehörenden Klebemomentes werden sie jedoch wieder kleiner. Bei großen Trägheitsmomenten liegt Punkt B außerhalb des interssierenden Bereiches. Die günstigsten Verhältnisse hinsichtlich des Anlaufes sind gegeben, wenn man mit kleinen Trägheitsmomenten auskommt und das Klebemoment so einstellt, wie durch Punkt A angegeben ist. Eine weitere Möglichkeit ist die Einstellung auf Punkt C bei großen Klebemomentwerten. Punkt C gibt dabei den Schnittpunkt der Linien 1 und 2 bei großen Werten des Klebemomentes an.

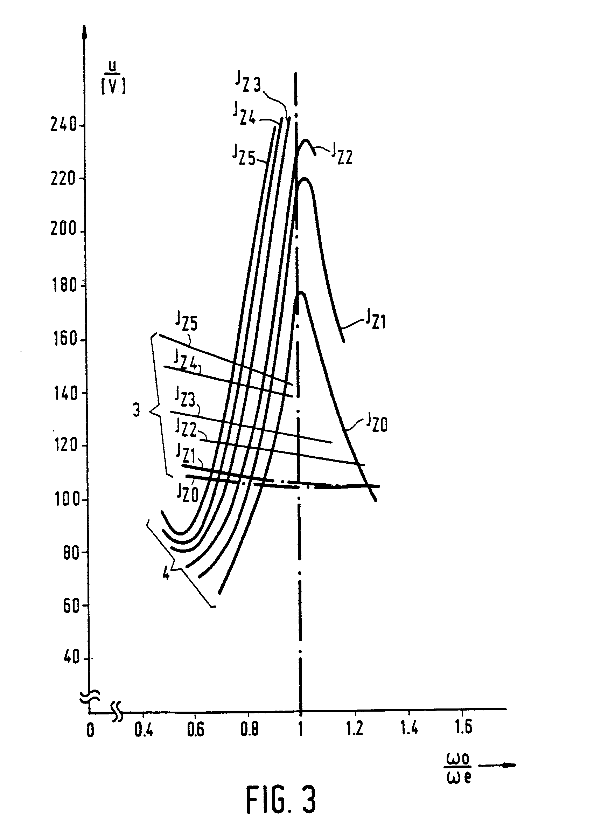

Fig. 3 zeigt die Spannungskurven des Motors in Abhängigkeit von dem Verhältnis von Eigenfrequenz des Motorlastsystems und der Netzfrequenz bei verschiedenen Werten des Trägheitsmomentes. Die Linien 3 zeigen die Spannungen, bei denen der Motor bei den verschiedenen Trägheitsmomenten $J_{z0}$ — $J_{z5}$ in Abhängigkeit von dem Frequenzverhältnis bei bestimmten Einschaltaugenblicken der Spannung in der Lage ist, anzulaufen. Die Linien 4 bezeichnen in ähnlicher Weise die Spannungen, bis zu welchen noch

5

Schwingungen auftreten können, die den Anlauf des Motors verhindern.

Liegt die Eigenfrequenz des Motorlastsystems in der Nähe der Netzfrequenz, so sind die Spannungen, bei denen noch Schwingungen auftreten können, wesentlich größer als normalerweise zu erwarten wäre. Dieser Bereich ist demnach äußerst ungünstig und wird vermieden, indem das Klebemoment und das Massenträgheitsmoment so eingestellt werden, daß die Eigenfrequenz, die sich daraus ergibt, größer oder kleiner als die Netzfrequenz ist. Vorzugsweise wird die Eigenfrequenz auf Wertz von 0,8—0,9 $\omega_e$ oder 1,1—1,2 $\omega_e$ eingestellt. Allgemein sollten derartige Verhältnisse von Eigenfrequenz zu Netzfrequenz so eingestellt werden, daß die Linien 4 unterhalb der zugehörigen Linien 3 liegen. Bei großen Trägheitsmomenten, bei denen die Linien 4 im interessierenden Bereich kein Maximum aufweisen, sind vorteilhaft nur Werte der Eigenfrequenz möglich, die kleiner als die Netzfrequenz sind.

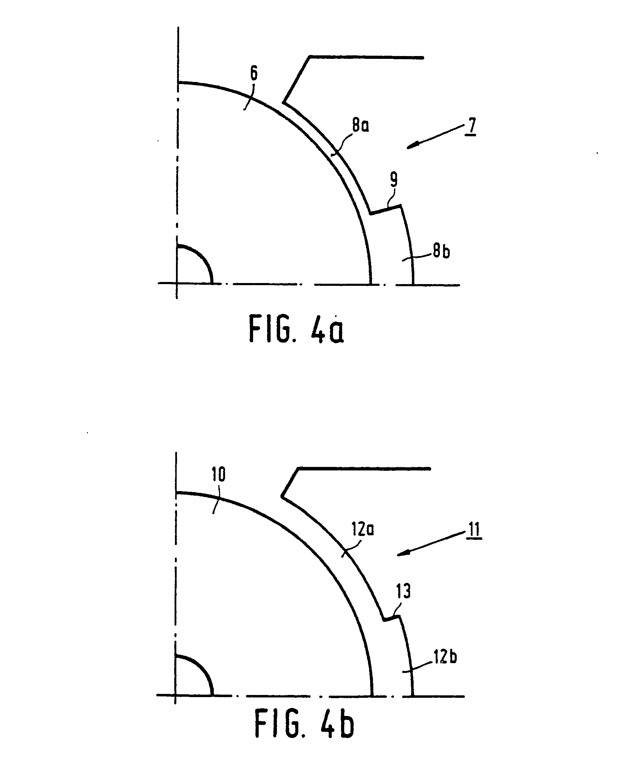

Der Ausschnitt in Fig. 4a zeigt einen Teil des Rotors 6 eines Einphasensynchronmotors, wobei das Magnetmaterial des Rotors 6 aus z. B. Barium- oder Strontiumferrit besteht. Ein im Ausschnitt dargestellter Pol 7 bildet zusammen mit dem Rotor 6 einen Luftspalt 8 aus, der einen engen Bereich 8a und einen breiteren Bereich 8b aufweist. Zwischen dem engeren und breiteren Bereich kann dabei ein Sprung 9 auftreten; der Übergang kann aber auch fließend sein. Gebräuchlich sind Werte des engeren Bereiches 8a von 0,3—0,65 mm und für den breiteren Bereich 8b ca. 0,95—1,5 mm.

Der Ausschnitt in Fig. 4b zeigt einen Teil eines Einphasensynchronmotors, dessen Rotor 10 aus Seltenen-Erden-Magnetmaterial besteht. Der dargestellte Ausschnitt eines Poles 11 bildet zusammen mit dem Rotor 10 einen Luftspalt 12, der einen engeren Bereich 12a und einen breiteren Bereich 12b aufweist. Zwischen dem engeren und breiteren Bereich kann wieder ein Sprung 13 vorgesehen sein. In diesem Fall kann der engere Bereich 12a eine Breite von größer als 0,65 mm, beispielsweise 0,9 mm, haben.

## Patentansprüche

1. Einphasensynchronmotor mit einem zweipoligen dauermagnetischen Rotor mit einem Magnetmaterial mit einer Remanenzinduktion $B_r$, mit einer spezifischen Dichte $\delta$, einem Rotordurchmesser d, einer Amplitude des resultierenden Klebemomentes $\hat{M}_{kl}$ und einem Massenträgheitsmoment des Systems J, dadurch gekennzeichnet, daß der Rotor aus höherwertigem Magnetmaterial besteht, wobei mit einer das Rotormaterial kennzeichnenden Konstanten

$$C = \frac{B_r}{\sqrt{\delta}} \qquad \text{größer als } 6,0 \quad \frac{mT}{\sqrt{kg/m^3}}$$

das Trägheitsmoment J und/oder das Klebemoment $\hat{M}_{kl}$ derartig beeinflußt sind, daß eine Eigenfrequenz des mit kleiner Amplitude frei schwingenden Systems aus Rotor und Last

$$\omega_0 = \sqrt{\frac{2\,\hat{M}_{kl}}{J}}$$

ungleich der Netzkereisfrequenz $\omega_e$ ist.

2. Einphasensynchronmotor nach Anspruch 1, dadurch gekennzeichnet, daß die Eigenfrequenz $\omega_0$ größer als 1,1—1,2 $\omega_e$ oder kleiner als 0,9—0,8 $\omega_e$ ist.

3. Einphasensynchronmotor nach den Ansprüchen 1 und 2, dadurch gekennzeichnet, daß der Luftspalt derart vergrößert ist, daß die Eigenfrequenz $\omega_0$ kleiner 0,9—0,8 $\omega_e$ ist.

4. Einphasensynchronmotor nach Anspruch 3, dadurch gekennzeichnet, daß der Luftspalt an der engsten Stelle größer als 0,65 mm, vorzugsweise 0,9 mm ist.

5. Einphasensynchronmotor nach den Ansprüchen 1 und 2, dadurch gekennzeichnet, daß das Magnetmaterial derart aufmagnetisiert ist, daß die Eigenfrequenz $\omega_0$ kleiner 0,9—0,8 $\omega_e$ ist.

6. Einphasensynchronmotor nach den Ansprüchen 1 und 2, dadurch gekennzeichnet, daß die Eigenfrequenz durch die Magnetisierungsverteilung des Rotors beeinflußt wird.

7. Einphasensynchronmotor nach den Ansprüchen 1 und 2, dadurch gekennzeichnet, daß der Luftspalt derart verkleinert ist, daß die Eigenfrequenz $\omega_0$ größer als, 1,1—1,2 $\omega_e$ ist.

8. Einphasensynchronmotor nach den Ansprüchen 1 und 2, dadurch gekennzeichnet, daß die Eigenfrequenz durch zusätzliche magnetische oder mechanische Momente vergrößert oder verkleinert wird.

9. Einphasensynchronmotor nach den Ansprüchen 1 und 2, dadurch gekennzeichnet, daß die Bohrung innerhalb des Rotorzylinders vergrößert wird.

10. Einphasensynchronmotor nach den Ansprüchen 1 und 2, dadurch gekennzeichnet, daß der Sättisgungsgrad des Statoreisens verändert wird.

**Revendications**

1. Moteur synchrone monophasé muni d'un rotor bipolaire à aimantation permanente constitué par un matériau magnétique ayant une induction résiduelle $b_r$ et une densité spécifique δ, et présentant un diamètre de rotor d, une amplitude $\hat{M}_{kl}$ du couple de retenue résultant et un moment d'inertie de masse J du système, caractérisé en ce que le rotor est constitué par un matériau magnétique de plus haute qualité, le moment d'inertie J et/ou le couple de retenue $\hat{M}_{kl}$ étant influencé au moyen d'une constante caractéristique du matériau du rotor

$$C = \frac{B_r}{\sqrt{\rho}} \qquad \text{supérieur à 6,0} \qquad \frac{mT}{\sqrt{kg/m^3}}$$

de telle façon qu'une fréquence propre

$$\omega_o = \sqrt{\frac{2\,\hat{M}_{kl}}{J}}$$

du système d'oscillation libre à faible amplitude constitué par le rotor et la charge différente de la fréquence angulaire $\omega_e$ du secteur.

2. Moteur synchrone monophasé selon la revendication 1, caractérisé en ce que la fréquence propre $\omega_o$ est supérieure à 1,1—1,2 $\omega_e$ ou inférieure à 0,9—0,8 $\omega_e$.

3. Moteur synchrone monophasé selon la revendications 1 et 2, caractérisé en ce que la largeur de l'entrefer est augmentée de façon que la fréquence propre $\omega_o$ est inférieure à 0,9—0,8 $\omega_e$.

4. Moteur synchrone monophasé selon la revendication 3, caractérisé en ce que l'entrefer à l'endroit le plus étroit a une largeur supérieure à 0,65 mm, de préférence égale à 0,9 mm.

5. Moteur synchrone monophasé selon la revendications 1 et 2, caractérisé en ce que le matériau magnétique est aimanté de façon que la fréquence propre $\omega_o$ est inférieure à 0,9—0,8 $\omega_e$.

6. Moteur synchrone monophasé selon la revendications 1 et 2, caractérisé en ce que la fréquence propre est influencée par la répartition d'aimantation du rotor.

7. Moteur synchrone monophasé selon la revendications 1 et 2, caractérisé en ce que la largeur de l'entrefer est diminuée de façon que la fréquence propre $\omega_o$ est supérieure à 1,1—1,2 $\omega_e$.

8. Moteur synchrone monophasé selon la revendications 1 et 2, caractérisé en ce que la fréquence propre est augmentée ou diminuée par des moments magnétiques ou mécaniques supplémentaires.

9. Moteur synchrone monophasé selon la revendications 1 et 2, caractérisé en ce que le dièmètre de l'alésage du cylindre rotorique est augmenté.

10. Moteur synchrone monophasé selon la revendications 1 et 2, caractérisé en ce que le degré de saturation du fer statorique est changé.

**Claims**

1. A single-phase synchronous motor comprising a two-pole permanent-magnet rotor of a magnet material having a remanence $B_r$, a specific density δ, a rotor diameter d, a resulting detent torque of an amplitude $\hat{M}_{k1}$, and a mass moment of inertia J, characterized in that the rotor is made of a high-grade magnet material, the moment of inertia J and/or the detent torque $\hat{M}_{k1}$ being influenced by a constant

$$C = \frac{B_r}{\sqrt{\rho}}$$

which is characteristic of the rotor material and which is larger than 6.0

$$\frac{mT}{\sqrt{kg/m^3}}$$

in such a way that a natural frequency

EP 0 151 497 B1

$$\omega_0 = \sqrt{\frac{2\,\hat{M}_{k1}}{J}}$$

of the low-amplitude freely oscillating system comprising the rotor and the load is unequal to the angular mains frequency $\omega_e$.

2. A single-phase synchronous motor as claimed in Claim 1, characterized in that the natural frequency $\omega_0$ is higher than 1.1 — 1.2 $\omega_e$ or smaller than 0.9—0.8 $\omega_e$.

3. A single-phase synchronous motor as claimed in Claims 1 and 2, characterized in that the air gap is enlarged in such a way that the natural frequency $\omega_0$ is lower than 0.9—0.8 $\omega_e$.

4. A single-phase synchronous motor as claimed in Claim 3, characterized in that at the narrowest location the air gap is larger than 0.65 mm, preferably 0.9 mm.

5. A single-phase synchronous motor as claimed in Claims 1 and 2, characterized in that the magnet material is magnetised in such a way that the natural frequency $\omega_0$ is lower than 0.9—0.8 $\omega_e$.

6. A single-phase synchronous motor as claimed in Claims 1 and 2, characterized in that the natural frequency is influenced by the magnetization distribution of the rotor.

7. A single-phase synchronous motor as claimed in Claims 1 and 2, characterized in that the air gap is reduced in such a way that the natural frequency $\omega_0$ is higher than 1.1—1.2 $\omega_e$.

8. A single-phase synchronous motor as claimed in Claims 1 and 2, characterized in that the natural frequency is increased or reduced by means of additional magnetic or mechanical moments.

9. A single-phase synchronous motor as claimed in Claims 1 and 2, characterized in that the bore in the rotor sleeve is enlarged.

10. A single-phase synchronous motor as claimed in Claims 1 and 2, characterised in that the degree of saturation of the stator iron is changed.

8

EP 0 151 497 B1

FIG. 1

1

FIG. 2

FIG. 3

FIG. 4a

FIG. 4b